# EUROPÄISCHE PATENTSCHRIFT

(11) **EP 1 179 626 B1**
(45) Veröffentlichungstag und Bekanntmachung des Hinweises auf die Patenterteilung: **25.03.2009**
(21) Anmeldenummer: 01119081.6
(22) Anmeldetag: 08.08.2001
(51) Int. Cl.: D04H 3/10, D04H 1/46

(54) **Filtermedium**
Filter medium
Matériau filtrant

(30) Priorität: 11.08.2000 DE 10039245
(43) Veröffentlichungstag der Anmeldung: 13.02.2002
(73) Patentinhaber: Johns Manville Europe GmbH, 60323 Frankfurt am Main (DE)
(72) Erfinder: Plötz, Kurt, 65529 Waldems (DE); Hassmann, Christian, 86868 Mittelneufnach (DE)
(74) Vertreter: Luderschmidt, Schüler & Partner

(56) Entgegenhaltungen:
- EP-A- 0 092 819
- EP-A- 0 993 854
- DE-A1- 19 500 669
- US-A- 5 288 536

## Beschreibung

Die Erfindung betrifft ein Filtermedium auf Basis von Spinnvliesen, dessen Herstellung sowie die Verwendung desselben als Filter für die Entfernung von festen Stoffen, insbesondere aus gasförmigen Medien wie die Entstaubung von Atemluft oder Gasen, von festen Stoffen aus Fest/flüssig-Gemischen sowie zur Trennung von Flüssig/flüssig - Gemischen, d. h. von zwei oder mehrphasigen flüssigen Gemischen.

Filtermedien auf Basis von Vliesen sowie deren Herstellung und deren Verwendung z. B. bei der Abtrennung von festen Teilchen durch Filtration sind bereits seit langem bekannt.

So wird in der DE 195 00 669 A1 ein Faservlies beschrieben, das durch hydrodynamische Verfestigung, d. h. durch Wasservernadelung bei einem Wasserdruck von bis zu höchstens 60 bar verfestigt wird. Die Dicke dieser Vliese soll lediglich bis zu 10 mm reichen, und das Gewicht entsprechend hergestellter Vliese beträgt 200 g/m² und weniger. Die Verdichtung des Vlies ist äußerst gering.

Die dort beschriebenen Faservliese können als Watteprodukt in der Kleiderindustrie, als Dochtschicht im Hygienebereich oder Sanitärbereich verwendet werden und auch als Filterprodukt. Die Vliese sind jedoch aufgrund des speziellen Herstellungsverfahrens verhältnismäßig schwach und nicht geeignet für einen längeren Dauerbetrieb. Auch lassen sie sich nur schwer reinigen und können deshalb nicht mehrfach eingesetzt werden, da sie bei mehrmaligem Einsatz sehr schnell an Effektivität verlieren. Auch verliert das Vlies selbst bei schonender Behandlung beim Reinigen schnell seinen Zusammenhalt.

Hinweise, welche Filtriervorgänge mit den dort beschriebenen Faservliesen durchgeführt werden sollen, sind in dieser deutschen Patentanmeldung nicht vorhanden.

Auch in der EP 0 092 819 A2 wird ein Filtermedium sowie ein entsprechendes Herstellungsverfahren beschrieben, bei dem ein Vlies hydrodynamisch, d. h. mit Wasserstrahlen verfestigt wird. Die dabei eingesetzten Fasern weisen einen Durchmesser von 0,1 bis 1,5 µm auf und gehören damit zur Kategorie der ultrafeinen oder Supermikrofasern. Diese sehr feinen Fasern werden vor allem nach dem sogenannten Melt-Blow-Verfahren hergestellt, sie weisen keine besonders hohen Festigkeiten auf und sind deshalb sehr empfindlich bei der Verarbeitung; es empfiehlt sich sogar bei der Verfestigung mittels Wasserstrahlen zwischen den Düsen und dem Vlies ein Netz anzubringen. Derartige Filter werden nach einmaligem Gebrauch meist durch Verbrennen entsorgt. Eine Reinigung und ein Wiedereinsatz ist schlechthin unmöglich.

Weitere Filter auf Basis von Vliesstoffen werden in der DE 198 43 000 A1 beschrieben. Bei der Herstellung der Filter findet zunächst eine Verdichtung durch Flüssigkeitsstrahlen statt, sodann müssen die Fasern noch adhäsiv oder kohäsiv miteinander verbunden werden, d. h. es findet noch ein Verschweißen oder ein Verbinden der Fasern durch Verkleben mit einem Bindemittel statt. Durch das Verkleben bzw. Verschweißen werden jedoch die Oberflächeneigenschaften des Filters negativ beeinflußt, so daß auch eine verschlechterte Filterwirkung auftritt; das Filtermaterial ist weniger elastisch und weniger durchlässig für Luft, da der Luftdurchgangswiderstand durch das Verschweißen und Verkleben reduziert wird.

In der EP 0 716 175 schließlich wird ganz allgemein die hydrodynamische Verwirbelung von Fasern in Vliesen beschrieben, bei denen das Fasermaterial aus fluorierten Polymeren wie Polyethylenchlortrifluorethylen besteht. Auch diese europäische Patentanmeldung lehrt die Herstellung der Fasern nach den sogenannten Melt-Blow-Verfahren, mit dem Fasern erhältlich sind, die mehr in den Bereich der Feinsttiter oder Mikrofasern fallen.

Obwohl bereits eine ganze Reihe von Filtern auf der Basis von Vliesstoffen sowie entsprechende Herstellungsverfahren bekannt sind, besteht immer noch ein Bedürfnis nach Filtermedien, die verbesserte Eigenschaften aufweisen und die nach verbesserten Verfahren hergestellt werden können.

Aufgabe der Erfindung ist deshalb, ein Filtermedium zur Verfügung zu stellen, das einfach, preiswert und umweltfreundlich hergestellt werden kann, das sich durch eine hervorragende Filterwirkung auszeichnet, nach Gebrauch einfach und wirksam gereinigt werden kann und somit zu mehrfachem Gebrauch verwendbar ist, das eine erhöhte Lebensdauer aufweist, gute mechanische Eigenschaften besitzt und problemlos konfektioniert werden kann. Aufgabe der Erfindung ist es ferner, ein Filtermedium zur Verfügung zu stellen, das vielseitig verwendbar ist, u.a. zur Reinigung von Gasen und Luft, insbesondere zum Abtrennen von Staub und feinen Partikelchen, zum Trennen von Flüssig/fest und Flüssig/flüssig Gemischen.

Diese Aufgabe wird gelöst durch ein Filtermedium gemäß Anspruch 1, das ein hydrodynamisch vernadeltes Spinnvlies aus synthetischen Filamenten umfaßt, wobei das Vlies eine Verdichtung von 1 : 1,5 bis 1 : 3 aufweist, ein Flächengewicht von 150 bis 600 g/m² besitzt, der Einzeltiter der Filamente des Spinnvlieses 0,8 bis 2,5 dtex beträgt. Das Filtermedium weist eine warmgeglättete Oberfläche auf. In einer weiteren Ausführungsform der Erfindung ist das Filtermedium auf beiden Seiten warmgeglättet, d. h. es weist eine warmgeglättete Oberseite und eine warmgeglättete Unterseite auf.

Vorzugsweise beträgt die Verdichtung des Vlieses 1:1,7 bis 1 : 2,4. Das Flächengewicht beträgt vorzugsweise 250 g/m² bis 500 g/m².

Besonders bevorzugt sind Vliesdicken vor der Verdichtung von 6 mm und weniger, insbesondere von 3 mm bis 5 mm. Als synthetisches Material für die Spinnvliese sind Polyester, insbesondere Polyethylenterephthalat besonders bevorzugt.

Ein weiterer Gegenstand der Erfindung ist ein Verfahren zur Herstellung eines Filtermediums gemäß Anspruch 10, das im Wesentlichen darin besteht, daß man aus synthetischen Polymeren ein Filamentspinnvlies herstellt; dieses Vlies hydrodynamisch mittels Wasserstrahlen verfestigt und vorzugsweise das Vlies einseitig warm glättet. Das Vlies kann auch beidseitig warmgeglättet werden. Vorzugsweise findet die Warmglättung mit Hilfe einer eine glatte Oberfläche aufweisenden Walze statt, die eine Temperatur aufweist, die 20 bis 50°C unter der Schmelztemperatur des verwendeten Polymers liegt. Geeignet ist auch ein Umdruckkalander. Die Vernadelung mittels Wasserstrahlen findet bevorzugt bei einem Druck zwischen 100 und 400 bar, vorzugsweise 150 bis 270 bar statt. Der Strahldurchmesser liegt vorteilhafterweise zwischen 0,07 und 0,1 mm. Nach dem Vernadeln findet eine Trocknung des Vlieses statt.

Die Verfestigung mittels Wasserstrahlen wird vorteilhafterweise so ausgeführt, daß eine Verdichtung von 1 : 1,5 bis 1 : 3, vorzugsweise 1 : 1,7 bis 2,4 stattfindet.

Die Bedingungen, um eine solche Verdichtung zu erhalten, können in einfacher Weise durch wenige Versuche durch Variieren des Wasserstrahldrucks und der Dichte und der Durchmesser der Strahlen gefunden werden. Zweckmäßig wird mit einer Nadeldichte von 10 bis 20 Strahlen/cm vernadelt. Als Filamente für die Herstellung des Filtermaterials sind kontinuierliche Filamente mit einem Einzeltiter von höchstens 3 dtex, vorzugsweise höchstens 2,5 dtex besonders geeignet. Als Material für die beim Verfahren eingesetzten Filamente sind Polyester, insbesondere Polyethylenterephthalat und zwar sowohl Homopolymere als auch Copolymere, sowie weitere fadenbildenden Polymere wie Polypropylen und Polyamide sehr vorteilhaft zu verwenden. Die Filamentvliese werden bevorzugt nach dem Spunbond-Verfahren hergestellt.

Das so hergestellte Spinnvlies kann - falls erforderlich - mechanisch vorverfestigt werden. Dies kann z. B. erforderlich werden, falls die Weiterbehandlung des Vlieses nicht unmittelbar möglich ist, sondern ein Transport des Vorproduktes erfolgen muß. Die Vorverfestigung kann mechanisch erfolgen, d.h. mittels Vernadelung, oder hydrodynamisch mittels Wasserstrahlen. Auch andere Vorverfestigungstechniken sind grundsätzlich möglich.

Zum Glätten einer Oberfläche des Vlieses werden vorzugsweise Glattwalzen eingesetzt, die auf eine Temperatur erhitzt sind, die unter dem Schmelzpunkt des Vliespolymers liegen. Vorzugsweise liegt diese Temperatur 20 bis 50°C unterhalb der Schmelztemperatur des verwendeten Polymers. Der Vorgang führt zu einer Glättung der Oberfläche, d.h. die Oberflächenfasern erweichen und die Oberfläche wird durch den äußeren Druck geglättet, ohne daß ein die Filterwirkung negativ beeinflussendes Aufschmelzen der Filamente erfolgt. Ein Aufschmelzen der Filamente würde aufgrund der Veränderung der Porengrößenverteilung zu einer unerwünschten Verschlechterung der Filtereigenschaften führen. In gleicher Weise können auch beide Oberflächen des Vlieses warmgeglättet werden.

Durch den Glättprozess erhält man eine glatte Oberfläche, welche die Filterwirkung nicht negativ beeinflußt und insbesondere zu einer reduzierten Haftung des Filterkuchens führt. Damit wird die Abreinigung des Filters erheblich erleichtert.

Ein weiterer Gegenstand der Erfindung ist die Verwendung des Filtermaterials zum Reinigen von Gasen, insbesondere Rauchgasen, Luft, insbesondere auch von Atemluft, sowie weiterer Fluide. Besonders vorteilhaft lassen sich die erfindungsgemäßen Filter zur Entstaubung von Atemluft, Luft oder sonstigen Gasen verwenden. Ferner lassen sich Fest/flüssig - Trennungen und Flüssig/flüssig-Trennungen durchführen.

Es war besonders überraschend, daß es gemäß der Erfindung möglich geworden ist ein Filtermaterial zu erhalten, das eine faserfreie Oberfläche aufweist, d. h. daß die Oberfläche so glatt ist, daß keine Fäserchen mehr abstehen. Dies bringt mit sich, daß die abfiltrierten Verunreinigungen wie Staubteilchen und dergleichen verhältnismäßig locker auf der Oberfläche zu liegen kommen, so daß die Filter, sobald es erforderlich ist, sehr einfach gereinigt werden können. Dies ist beispielsweise mit einer Impulsreinigung möglich. Auch können die Teilchen gut mit Hilfe von unter Druck stehender Luft weggeblasen werden.

Die entsprechend der Erfindung hergestellten Filter benötigen keine weitere Verstärkung. Dies ist insbesondere bei der Impulsreinigung von entscheidendem Vorteil, da sich das erfindungsgemäß hergestellte Vlies bei der Reinigungsprozedur stets im elastischen Bereich befindet und sich somit ideal reinigen läßt. Dies wird unterstützt durch die o.g. glatte Filteroberfläche, die ein leichtes Entfernen des Filterkuchens ermöglicht. Die erfindungsgemäß hergestellten Filter weisen eine gute Reinigungseffizienz auf, ohne daß Schädigung des Filter auftritt. Dies zusammen führt zu einer deutlichen Erhöhung der Filterstandzeiten bzw. der Lebensdauer des Filters.

Das Filtermaterial weist sehr gute mechanische Eigenschaften auf, so daß es gut konfektioniert werden kann und während des Betriebs sehr widerstandsfähig gegenüber mechanischen Verletzungen ist. Es ist nicht erforderlich das Filtermaterial noch durch Verwendung eines Binders oder eines Stützgewebes zu verfestigen. Infolgedessen weist das Filter nicht nur eine hohe mechanische Festigkeit auf, sondern hat auch eine hohe Luftdurchdringungszahl, was bedeutet, daß eine hohe Filterleistung erreicht wird. Das Filtermaterial läßt sich problemlos zu allen üblichen Filterformen konfektionieren.

Aufgrund seiner guten Eigenfestigkeit ist es auch nicht erforderlich, die Filter mit weiteren Verstärkungsmaterialien zu versehen, durch welche die Filterleistung herabgesetzt würde bzw. welche auch den Reinigungsprozess nach Gebrauch des Filters beeinträchtigen würde.

Da die Filter sehr leicht und ohne Schädigung des Filtermaterials gereinigt werden können, haben die erfindungsgemäßen Filter auch eine sehr lange Lebensdauer, so daß die Filterstandszeiten deutlich erhöht werden können.

Das Filtermedium kann zu allen üblichen Aufmachungen konfektioniert werden und beispielsweise sowohl als Schlauchfilter als auch als Taschenfilter eingesetzt werden. Die Vliese lassen sich ohne weiteres in verschiedenen Dicken herstellen, so ist es möglich Vliese mit einer Dicke bis zu 6 mm vor Verfertigung zu verwenden, ohne daß ein ernsthaftes Abfallen der Filterleistung trotz Verdichtung zu befürchten ist.

Das Filtermedium läßt sich sehr vielseitig einsetzen. Neben dem Gas/Fest-Trennungen wie z. B. der Reinigung von Gasen, Luft und Atemluft der Herstellung von staubfreier und steriler Luft für Fabrikationsräume u.ä., Entfernen von radioaktiven Partikeln aus Gasen und Luft lassen sich die Filtermedien gemäß der Erfindungen auch für vielfältige Fest/flüssig- und Flüssig/flüssig-Trennungen einsetzen, so z. B. zum Abtrennen von Metallteilchen aus Flüssigkeiten wie Emulsionen, zum Reinigen von Flüssigkeiten und Abtrennen von Bestandteilen in der Lebensmittelindustrie oder auf industriellen Gebieten, im Trinkwasser-und Abwasserbereich, zur Biofiltration u. dgl.

Die Erfindung wird durch folgende Beispiele näher erläutert.

### Beispiel 1

Ein Polyestervlies aus Polyethylenterephthalat wird nach dem Spunbondverfahren mittels sechs Spinnbalken hergestellt. Es wird ein Flächengewicht von 350 g/m² eingestellt, dabei liegt die Dicke bei 3,7 mm. Der Filamenttiter der Einzelfilamente betrug 2 dtex. Das Vlies wurde anschließend einer beidseitigen Wasserstrahlvernadelung mit einem Druck von 250 bar unterworfen und dabei verfestigt. Danach wird eine einseitige Glättung mit einer heißen Walze vorgenommen, die eine Temperatur von 215°C aufwies. Nach der Vernadelung betrug die Vliesdicke 1,7 mm. Die Höchstzugkräfte wurden zu (l/q) 148/128 daN/5 cm ermittelt. Die Luftdurchlässigkeit betrug 2761/m²sec.

### Beispiel 2

In ähnlicher Weise wie in Beispiel 1 beschrieben wurde nach dem Spunbondverfahren ein Polyestervlies mit einem Flächengewicht von 500g/m² hergestellt, das eine Dicke von 4,9 mm aufwies. Dann wurde durch Wasserstahlvernadelung auf 2,4 mm verdichtet und anschließend geglättet, die Dicke betrug danach 2,2 mm, die Höchstzugkraft (l/q) 216 / 104 daN/5 cm und die Luftdurchlässigkeit 202 l/m² sec.

## Patentansprüche

1. Filtermedium umfassend ein hydrodynamisches vernadeltes Spinnvlies aus synthetischen Filamenten, das eine Verdichtung von 1 : 1,5 bis 1 : 3 und eine Vliesdicke nach dem Verdichten von 1 bis 3 mm aufweist, ein Flächengewicht von 150 bis 600 g/m² besitzt, wobei der Einzeltiter der Filamente des Spinnvlieses 0,8 bis 2,5 dtex beträgt.

2. Filtermedium nach Anspruch 1, **dadurch gekennzeichnet, dass** es eine warmgeglättete Oberfläche aufweist.

3. Filtermedium nach Anspruch 1, **dadurch gekennzeichnet, dass** es eine warmgeglättete Oberseite und eine warmgeglättete Unterseite aufweist.

4. Filtermedium nach Anspruch 1,2 oder 3, **dadurch gekennzeichnet, dass** die Verdichtung des Vlieses 1,7 bis 1 : 2,4 beträgt.

5. Filtermedium nach mindestens einem der Ansprüche 1 bis 4, **dadurch gekennzeichnet, dass** das Flächengewicht 250 g/m² bis 500 g/m² beträgt.

6. Filtermedium nach mindestens einem der Ansprüche 1 bis 5, **dadurch gekennzeichnet, dass** die Vliesdicke vor der Verdichtung 6 mm oder weniger beträgt.

7. Filtermedium nach Anspruch 6, **dadurch gekennzeichnet, dass** die Vliesdicke vor der Verdichtung 3 bis 5 mm beträgt.

8. Filtermedium nach mindestens einem der Ansprüche 1 bis 7, **dadurch gekennzeichnet, dass** die synthetischen Filamente Polyesterfilamente, vorzugsweise Polyethylenterephthalatfilamente sind.

9. Filtermedium nach mindestens einem der Ansprüche 1 bis 7, **dadurch gekennzeichnet, dass** die synthetischen Filamente Polyamidfilamente sind, vorzugsweise Polyamid 6 oder Polyamid 66- Filamente.

10. Verfahren zur Herstellung eines Filtermediums, wobei man aus synthetischen Polymeren ein Filamentvlies herstellt, dieses Vlies, dessen Filamente einen Einzeltiter von 0,8 bis 2,5 dtex aufweisen, hydrodynamisch mittels Wasserstrahlen mit einer Verdichtung von 1:1,5 bis 1:3 auf eine Dicke von 1 bis 3 mm verfestigt und anschließend trocknet.

11. Verfahren nach Anspruch 10, **dadurch gekennzeichnet, dass** man das Vlies einseitig warm glättet.

12. Verfahren nach Anspruch 10, **dadurch gekennzeichnet, dass** man das Vlies beidseitig warm glättet.

13. Verfahren nach Anspruch 11 oder 12, **dadurch gekennzeichnet, dass** man das Vlies mit Hilfe von einer eine glatte Oberfläche aufweisenden Walze glättet, die eine Temperatur aufweist, die 20 bis 50°C unter der Schmelztemperatur des verwendeten Polymers liegt.

14. Verfahren nach mindestens einem der Ansprüche 10 bis 13, **dadurch gekennzeichnet, dass** man die Vernadelung mittels Wasserstrahlen bei einem Druck von 100 bis 400 bar durchführt.

15. Verfahren nach Anspruch 14, **dadurch gekennzeichnet, dass** man die Vernadelung bei einem Druck von 150 bis 270 bar durchführt.

16. Verfahren nach mindestens einem der Ansprüche 10 bis 15, **dadurch gekennzeichnet, dass** man die hydrodynamische Vernadelung mit Wasserstrahlen durchführt, die einen Strahldurchmesser von 0,07 bis 0,13 mm aufweisen.

17. Verfahren nach mindestens einem der Ansprüche 10 bis 16, **dadurch gekennzeichnet, dass** man die Verfestigung mittels Wasserstrahlen bis zu einer Verdichtung von 1 : 1,7 bis 1 : 2,4 durchführt.

18. Verwendung der Filtermedien nach einem der Ansprüche 1 bis 9 oder hergestellt nach einem Verfahren nach einem der Ansprüche 10 bis 17 zur Reinigung von Gasen oder Luft.

19. Verwendung der Filtermedien, nach einem der Ansprüche 1 bis 9 oder hergestellt nach einem Verfahren nach einem der Ansprüche 10 bis 17, zum Entstauben von Atemluft, Luft oder sonstigen Gasen.

20. Verwendung der Filtermedien nach einem der Ansprüche 1 bis 9 oder hergestellt nach einem Verfahren nach einem der Ansprüche 10 bis 17 zum Trennen von Fest/FlüssigGemischen.

## Claims

1. A filter medium comprising a hydrodynamically needle-punched spunbonded nonwoven fabric made from synthetic filaments, which has a compression ratio of 1 : 1.5 to 1 : 3 and a thickness after compression of 1 mm to 3 mm, a weight per unit area of 150 g/m² to 600 g/m², wherein the individual titre of the filaments of the spunbonded nonwoven fabric is 0.8 dtex to 2.5 dtex.

2. The filter medium according to claim 1, **characterized in that** it has a heat-smoothed surface.

3. The filter medium according to claim 1, **characterized in that** it has a heat-smoothed upper surface and a heat-smoothed lower surface.

4. The filter medium according to claim 1, 2 or 3, **characterized in that** the compression ratio of the nonwoven fabric is 1 : 1.7 to 1 : 2.4.

5. The filter medium according to at least one of the claims 1 to 4, **characterized in that** the weight per unit area is 250 g/m² to 500 g/m².

6. The filter medium according to at least one of the claims 1 to 5, **characterized in that** the thickness of the nonwoven fabric before compression is 6 mm or less.

7. The filter medium according to claim 6, **characterized in that** the thickness of the nonwoven fabric before compression is 3 mm to 5 mm.

8. The filter medium according to at least one of the claims 1 to 7, **characterized in that** the synthetic filaments are polyester filaments, preferably polyethylene terephthalate filaments.

9. The filter medium according to at least one of the claims 1 to 7, **characterized in that** the synthetic filaments are polyamide filaments, preferably polyamide 6 or polyamide 66 filaments.

10. A method for producing a filter medium, wherein a nonwoven filament fabric is made from synthetic polymers, this nonwoven fabric, the filaments of which have an individual titre of 0.8 dtex to 2.5 dtex, being bonded hydrodynamically, by means of water jets, to a compression ratio of 1 : 1.5 tol : 3 to produce a thickness of 1 mm to 3 mm, and subsequently dried.

11. The method according to claim 10, **characterized in that** the nonwoven fabric is heat-smoothed on one side.

12. The method according to claim 10, **characterized in that** the nonwoven fabric is heat-smoothed on both sides.

13. The method according to claim 11 or 12, **characterized in that** the nonwoven fabric is smoothed with the aid of a roller having a smooth surface which is at a temperature of 20°C to 50°C below the melting point of the polymer used.

14. The method according to at least one of the claims 10 to 13, **characterized in that** the needle-punching is carried out with water jets at a pressure- of 100 bar to 400 bar.

15. The method according to claim 14, **characterized in that** the needle-punching is carried out at a pressure of 150 bar to 270 bar.

16. The method according to at least one of the claims 10 to 15, **characterized in that** the hydrodynamic needle-punching is carried out with water jets having a jet diameter of 0.07 mm to 0.13 mm.

17. The method according to at least one of the claims 10 to 16, **characterized in that** the bonding is carried out, by means of water jets, up to a compression ratio of 1 : 1.7 to 1 : 2.4.

18. Use of the filter medium according to any one of the claims 1 to 9 or made according to a method according to any one of the claims 10 to 17, for cleaning gases or air.

19. The use of the filter media according to any one of the claims 1 to 9 or made according to a method according to any one of the claims 10 to 17, for removing dust from breathing air, air or other gases.

20. The use of the filter media according to any one of the claims 1 to 9 or made according to a method according to any one of the claims 10 to 17 for separating solid/fluid mixtures.

## Revendications

1. Milieu de filtrage comprenant un rembourrage de filage hydrodynamique avec imprégnation d'envers en filaments synthétiques, comportant une compression entre 1 : 1,5 et 1 : 3 et ayant une épaisseur du rembourrage de 1 - 3 mm après la compression, un poids sur la surface entre 150 et 600 g/mc, dans le quel le titre singulier des filaments du rembourrage de filage avec imprégnation d'envers se trouve entre 0,8 et 2,5 étex.

2. Milieu de filtrage selon revendication 1, **caractérisé en ce qu'**il comporte une surface polie à chaud.

3. Milieu de filtrage selon revendication 1, **caractérisé en ce qu'**il comporte une surface supérieure polie à chaud et une surface inférieure polie à chaud.

4. Milieu de filtrage selon une des revendications 1, 2 ou 3, **caractérisé en ce que** la compression des rembourrages se trouve entre 1,7 et 1 : 2,4.

5. Milieu de filtrage selon au moins une des revendications précédentes 1 à 4, **caractérisé en ce que** le poids en surface se trouve entre 250 g/mc et 500 g/mc.

6. Milieu de filtrage selon au moins une des revendications précédentes 1 à 5, **caractérisé en ce que** l'épaisseur du rembourrage avant la compression est de 6 mm ou moins.

7. Milieu de filtrage selon revendication 6, **caractérisé en ce que** l'épaisseur du rembourrage avant la compression se trouve entre 3 et 5 mm.

8. Milieu de filtrage selon une des revendications 1 à 7, **caractérisé en ce que** les filaments synthétiques sont filaments en polyester, et préférablement des filaments en téréphtalate de polyéthylène.

9. Milieu de filtrage selon au moins une des revendications 1 à 7, **caractérisé en ce que** les filaments synthétiques sont des filaments en polyamide, et préférablement des filaments en polyamide 6 ou polyamide 66.

10. Méthode pour la production d'un milieu de filtrage, dans la quelle on produit un rembourrage des filaments en polymères synthétiques, d'une façon que les filaments de ce rembourrage comprennent un titre unique de 0,8 - 2,5 étex, en le solidifiant vers un épaisseur entre 1 et 3 mm d'une façon hydrodynamique moyennant de jets d'eau pour le sécher en conclusion.

11. Méthode selon revendication 10, **caractérisée en ce que** le rembourrage est poli à chaud sur une côté.

12. Méthode selon revendication 10, **caractérisée en ce que** le rembourrage est poli à chaud sur les deux côtés.

13. Méthode selon les revendications 11 ou 12, **caractérisée en ce que** le rembourrage est poli par un cylindre comprenant une surface polie et une température qui se trouve entre 20 et 50 °C au-dessous de la température de fusion du polymère utilisé.

14. Méthode selon au moins une des revendications 10 à 13, **caractérisée en ce que** l'imprégnation d'envers est exécutée par des jets d'eau avec une pression entre 100 et 400 bar.

15. Méthode selon revendication 14, **caractérisée en ce que** l'imprégnation d'envers est exécutée avec une pression entre 150 et 270 bar.

16. Méthode selon au moins une des revendications 10 à 15, **caractérisée en ce que** l'imprégnation hydrodynamique est exécutée par des jets d'eau comportant un diamètre du jet d'eau entre 0,07 et 0,13 mm.

17. Méthode selon au moins une des revendications 10 à 16, **caractérisée en ce que** la solidification est exécutée par des jets d'eau jusqu'à une solidification entre 1 : 1,7 et 1 : 2,4.

18. Utilisation des milieux de filtrage selon une des revendications 1 à 9 ou produits selon une méthode utilisée selon une des revendications 10 à 17 pour le nettoyage des gazes et de l'air.

19. Utilisation des milieux de filtrage selon une des revendications 1 à 9 ou produits selon une méthode utilisée selon une des revendications 10 à 17 pour dépoussiérer air respirable, air ou d'autres gazes.

20. Utilisation des milieux de filtrage selon une des revendications 1 à 9 ou produits selon une méthode utilisée selon une des revendications 10 à 17 pour la séparation des mixtures solides et liquides.
